(19) Europäisches Patentamt
European Patent Office
Office européen des brevets

(11) **EP 3 006 954 B1**

(12) **EUROPÄISCHE PATENTSCHRIFT**

(45) Veröffentlichungstag und Bekanntmachung des Hinweises auf die Patenterteilung:
**06.05.2020  Patentblatt 2020/19**

(51) Int Cl.:
*G01S 13/28* *(2006.01)*      *G01S 7/288* *(2006.01)*
*G01S 13/524* *(2006.01)*     *G01S 13/58* *(2006.01)*

(21) Anmeldenummer: **15189031.6**

(22) Anmeldetag: **08.10.2015**

(54) **ORTUNGSSIGNALCODIERER FÜR EINE ORTUNGSSIGNALVORRICHTUNG, SOWIE ZUGEHÖRIGES VERFAHREN**

LOCATING SIGNAL ENCODER FOR A LOCATING SIGNAL DEVICE, AND CORRESPONDING METHOD

CODEUR DE SIGNAL DE LOCALISATION POUR UN DISPOSITIF DE SIGNAL DE LOCALISATION, ET PROCÉDÉ CORRESPONDANT

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **09.10.2014   DE 102014220536**

(43) Veröffentlichungstag der Anmeldung:
**13.04.2016   Patentblatt 2016/15**

(73) Patentinhaber: **Fraunhofer-Gesellschaft zur Förderung der angewandten Forschung e.V.**
**80686 München (DE)**

(72) Erfinder: **Cristallini, Diego**
**53113 Bonn (DE)**

(74) Vertreter: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
**EP-A1- 1 804 077       EP-A2- 1 457 789**
**US-A1- 2012 055 250**

- **MATOUSEK ZDENEK ET AL: "M-FSK intra-pulse modulation analysis by Subspectral Decomposition Method", 2013 INTERNATIONAL CONFERENCE ON APPLIED ELECTRONICS, UNIVERSITY OF WEST BOHEMIA, 9. September 2014 (2014-09-09), Seiten 201-204, XP032724747, ISSN: 1803-7232, DOI: 10.1109/AE.2014.7011701 ISBN: 978-80-261-0166-6 [gefunden am 2015-01-15]**
- **J.P. COSTAS: "A study of a class of detection waveforms having nearly ideal range—Doppler ambiguity properties", PROCEEDINGS OF THE IEEE., Bd. 72, Nr. 8, 1. August 1984 (1984-08-01) , Seiten 996-1009, XP055246981, US ISSN: 0018-9219, DOI: 10.1109/PROC.1984.12967**
- **JIANN-CHING GUEY ET AL: "Diversity Waveform Sets for Delay-Doppler Imaging", IEEE TRANSACTIONS ON INFORMATION THEORY, IEEE PRESS, USA, Bd. 44, Nr. 4, 1. Juli 1998 (1998-07-01), XP011027107, ISSN: 0018-9448**

EP 3 006 954 B1

## Beschreibung

Die vorliegende Erfindung bezieht sich auf einen Ortungssignalcodierer und eine Ortungsvorrichtung mit einem Ortungssignalcodierer. Ferner wird ein Verfahren zur Codierung eines Ortungssignals sowie ein Verfahren zur Ortung eines Objekts gezeigt. Ausführungsbeispiele zeigen einen Signalverlaufsentwurf für gleichzeitige Nah- bis Fernreichweitenüberwachung von sich sehr schnell bewegenden Zielen, beispielsweise mittels Radar.

Ein Signal, das beispielsweise durch ein Radar mit Hochfrequenz übertragen wird, wird durch ein sich sehr schnell bewegendes punktartiges Ziel reflektiert, das in einem unbekannten Abstand angeordnet ist, der von einem minimalen Abstand $R_{NEAR}$ zu einem maximalen Abstand $R_{FAR}$ reicht, und wird dann durch den Radar empfangen. Um einer unvermeidbaren Dämpfung des übertragenen Signals über die Zweiwegausbreitung entgegenzuwirken, sollten lange Signale übertragen werden, da die Erhöhung der übertragenen Spitzenleistung normalerweise aufgrund von technologischen Beschränkungen begrenzt ist. Das Echosignal ist eine verzögerte und gedämpfte Kopie des übertragenen Signals und ist aufgrund der relativen Geschwindigkeit zwischen Radar und Ziel auch Dopplermoduliert. Das Echosignal an dem Radarempfänger wird abwärtsgewandelt auf eine Zwischen- oder Basisbandfrequenz und dann digital abgetastet. Das digitalisierte Echosignal wird reichweitenkomprimiert (engl.: ranged-compressed) durch angepasstes Filtern bzw. Filtern mit einem Optimalfilter (engl.: matched filter) mit einer Kopie des übertragenen Signals. Als Folge der Reichweitenkomprimierung ist die Antwort von einem punktartigen Ziel zeitlich komprimiert. Dies bedeutet, die Energie des empfangenen Signals ist in einem kurzen Zeitintervall konzentriert, was zu einem Signal mit Spitzen über der Zeit führt. Die Reichweitenkomprimierung hat den doppelten Vorteil des Verbesserns der Zielerfassung (da die Energie, die in einem kleinen Zeitintervall konzentriert ist, das sogenannte Signal-Rausch-Verhältnis, verbessert ist) und ermöglicht auch die Unterscheidung eng beabstandeter Ziele, wenn lange Signale übertragen werden. In der Tat kann nachgewiesen werden, dass die Breite des reichweitenkomprimierten Signals von einem punktartigen Ziel nicht von der Zeitdauer des übertragenen Signals abhängt, sondern invers proportional zu der übertragenen Signalbandbreite ist. Anders ausgedrückt, wenn eine Reichweitenkomprimierung implementiert ist, wird durch Erhöhen der Signalbandbreite eine bessere Reichweitenauflösung erreicht. Aus diesen Gründen ist ein üblicher Radarsignalverlauf das linear frequenzmodulierte (LFM) Signal (auch bekannt als Chirp-Signal). Dies wird durch ein sinusförmiges Signal gebildet, das während der Pulsdauer die gesamte Bandbreite abdeckt bzw. alle auftretenden Frequenzen durchläuft.

In monostatischen (oder quasi-monostatischen) Radarsystemen sind die Antennen, die für die Übertragung und den Empfang verwendet werden, dieselben (oder eng beabstandet bzw. eng nebeneinander angeordnet), so dass Übertragungs- und Empfangsphasen nicht zeitlich überlappen können. Anders ausgedrückt, der Empfang kann nur nach dem Ende der Übertragung beginnen. Der direkte Empfang des Signals, das auf Grund der kurzen Entfernung ein starkes übertragenes Signal ist, kann sogar die Radarempfangskette beschädigen, die entworfen ist, um mit Signalen zu arbeiten, die Leistungspegel aufweisen, die vergleichbar sind mit dem thermischen Rauschen. Der Beginn der Empfangsphase nach dem Ende der Übertragung erzeugt die sogenannten blinden Radarreichweiten. Anders ausgedrückt, Ziele zu nah an dem Radar können eventuell nicht erfasst werden, da ihr entsprechendes Echosignal empfangen wird, während der Radar weiterhin überträgt. Dieses Problem ist besonders offensichtlich bei Radarsystemen, die sehr lange Pulse bzw. Ortungssignals übertragen, das heißt Radarsysteme, die bis zu sehr fernen Reichweiten überwachen. Anders ausgedrückt, Radarsysteme, die entworfen sind, um sehr fernen Reichweiten zu überwachen, können nicht gleichzeitig sehr nahe Reichweiten überwachen. Dies gilt genauso umgekehrt. Radare, die bei sehr nahen Reichweiten überwachen, benötigen sehr kurze Übertragungspulse und sind daher nicht in der Lage, ausreichend Energie zu senden, um Echos von Zielen in sehr fernen Reichweiten zu erfassen.

Radarsysteme messen normalerweise nicht nur den Abstand des Ziels, sondern auch dessen Radialgeschwindigkeit. Dafür werden gepulste Radare verwendet, die eine Sequenz von Pulsen in einer gegebenen Richtung senden, und die Dopplermodulation der empfangenen Echos von Puls zu Puls messen. Die Nutzung einer Sequenz von Pulsen wird auch benötigt, um die Energie zu verbessern, die von einem gegebenen Ziel gesammelt wird, wodurch dessen Erfassbarkeit erhöht wird. Genauer gesagt, die Frequenz des Sendens von Pulsen wird als Pulswiederholfrequenz (pulse repetition frequency, PRF) bezeichnet. Der ausgewählte PRF-Wert stellt die Intervalle einer eindeutigen Messung der Dopplerfrequenz ein. Das Inverse der PRF bestimmt auch die maximale eindeutige Reichweite. Die Auswahl der PRF hat auch Auswirkungen auf die Auswahl der übertragenen Pulsdauer. In der Tat sollte aufgrund technologischer Beschränkungen das Produkt der PRF und der Pulsdauer, das sogenannte Tastverhältnis, unter einem gewissen Schwellenwert gehalten werden (25% ist ein typischer Wert), um Überhitzen der Übertragungshardwarekomponenten zu vermeiden.

Als Folge benötigt ein Radarsystem, das sehr weit entfernte Objekte überwachen möchte, sehr lange Pulse und auch einen sehr niedrigen PRF-Wert. Dies impliziert eine sehr lange blinde bzw. nicht erfassbare Reichweite und impliziert auch eine mehrdeutige Messung der Dopplerfrequenz (und somit der Radialgeschwindigkeit) für sich schnell bewegende Ziele. Daher wird durch Verwenden eines herkömmlichen Radarsignalverlaufsentwurfs eine gleichzeitige und eindeutige Überwachung von einer sehr nahen zu einer sehr fernen Reichweite verhindert.

Die Druckschrift XP32724747 "M-FSK Intrapulse Modulation Analysis By Subspectral Decomposition Method" zeigt eine Intrapulsmodulationsanalyse von einem detektierten Signal mit einem intelligenten Empfänger. Eine Signalquellsignatur wird mittels Frequenzumtastung erhalten.

Dokument EP 1 457 789 A2 zeigt ein Verfahren, um Radarsignale zu übermitteln. Das Verfahren umfasst das Versenden einer Reihe von Pulsen, wobei jeder Puls zeitlich durch eine Interpulsperiode getrennt ist. Ferner wird jeder Puls in der Serie mit einem unterschiedlichen Zeichen eines ersten Codes moduliert.

Die Druckschrift XP055246981 "A Study of a Class of Detection Waveforms having Nearly Ideal Range-Doppler Ambiguity Properties" zeigt ein kohärentes Verarbeiten von Wellenformen, die frequenzspringende einheitliche Impulsfolgen aufweisen. Die Parameter der Impulsfolge können so gewählt werden, dass eine Dopplerantwort eindeutig konsistent mit einer Gesamtaussendezeit und Bandbreite ist.

Die Druckschrift EP 1 804 077 A1 zeigt ein System und ein Verfahren, um meteorologische Phänomene durch Aussenden einer Abfolge von Pulsen zu detektieren, wobei jeder Puls einen langen Entfernungsbereich und einen kurzen Entfernungsbereich aufweist. Echos werden basierend auf der Sequenz der Pulse erhalten. Ein Filter kann nun ein Mehrdeutigkeitssignal hieraus gewinnen.

Die Druckschrift US 2012/0055250 A1 zeigt ein Ultraschallverfahren, das ein codiertes Ultraschallsignal in zumindest zwei Empfängern empfängt und zwei Empfangssignale generiert.

Die Druckschrift XP11027107 "Diversity Waveform Sets for Delay-Doppler Imaging" zeigt ein Pulsechoverzögerungsdopplermesssystem wie ein Radar oder ein aktives Sonar, das eine Umgebung durch Ausleuchtung mit einer elektromagnetischen oder akustischen Strahlung misst.

Der vorliegenden Erfindung liegt somit die Aufgabe zugrunde, ein verbessertes Konzept zur Ortung von Objekten, beispielsweise mittels Radar, zu schaffen.

Diese Aufgabe wird durch den Gegenstand der unabhängigen Patentansprüche gelöst. Erfindungsgemäße Weiterbildungen sind in den Unteransprüchen definiert.

Ausführungsbeispiele zeigen einen Ortungssignalcodierer für eine Ortungsvorrichtung, die basierend auf einem Ortungssignal mit einem ersten Teilsignal und einem zweiten Teilsignal arbeitet. Der Ortungssignalcodierer ist ausgebildet, das Ortungssignal in einem ersten und einem zweiten Teilbereich zu kodieren, wobei das Codieren des ersten Teilsignals, das den ersten Teilbereich und einen Abschnitt des zweiten Teilbereichs einnimmt, einen ersten Codierparameter und das Codieren des zweiten Teilsignals, der den Rest des zweiten Teilbereichs einnimmt, einen zweiten Codierparameter umfasst.

Der Erfindung liegt die Erkenntnis zugrunde, dass eine Ortung und eine Geschwindigkeitsmessung eines sich sehr schnell bewegenden Objekts mit einem entsprechend beschaffenen und codierten bzw. modulierten Sendesignal gleichzeitig in einem Nah- und einem Fernbereich möglich ist. Das Sendesignal ist derart ausgebildet, dass es zwei zueinander orthogonale Teilsignale aufweist. Ferner umfasst das Sendesignal einen ersten und einen zweiten Teilbereich, wobei der zweite Teilbereich einen hinteren Abschnitt des ersten Teilsignals und das zweite Teilsignal umfasst. Die zueinander orthogonalen Teilsignale resultieren in eine Orthogonalität des zweiten Teilbereich zu jedem möglichen Teil des Ortungssignals. Beispielsweise ist der hintere Teilbereich orthogonal zu jedem möglichen reflektierten Ortungssignal. Das reflektierte Ortungssignal kann z. B. digitalisiert werden, so dass der hintere Teilbereich orthogonal zu einer Aneinanderreihung von jedem möglichen, empfangenen Zeitschlitz bzw. zu einem empfangenen Signal, dass aus einer beliebigen Anzahl von Zeitschlitzen besteht, ist. Dies ermöglichen das Orten von Objekten in einem Nah- und einem Fernbereich. Die Orthogonalität der beiden Teilsignale wird durch eine Codierung der beiden Teilsignale mit einem sich voneinander unterscheidenden Code realisiert. Ein geschicktes Codierverfahren ermöglicht ferner die Bestimmung der Dopplerfrequenz und somit der Geschwindigkeit des detektierten Objekts ebenso wie dessen Entfernung. Somit können die oben erwähnten Begrenzungen gleichzeitiger und eindeutiger Nah-bis-Fernreichweitenüberwachung von sich sehr schnell bewegenden Zielen überwunden werden.

Ausführungsbeispiele zeigen einen Ortungssignalcodierer, wobei der erste und der zweite Teilbereich die gleiche Bandbreite aufweisen. Ferner ist das im zweiten Teilbereich codierte Ortungssignal orthogonal zu jedem möglichen Teil des Ortungssignals. Dies ist, in Kombination mit der Orthogonalität, vorteilhaft, da somit der alleinige Empfang des zweiten Teilsignals ausreicht, um die bestmögliche Entfernungsauflösung des zu detektierenden Objekts zu ermöglichen.

Ausführungsbeispiele zeigen den Ortungssignalcodierer, der das ersten Teilsignal und das zweiten Teilsignal mit einem Code unterschiedlicher Länge codiert. Ferner kann der Ortungssignalcodierer ausgebildet sein, das Ortungssignal mit einem Frequenzmodulierten Codierverfahren, beispielsweise einem Costas-Code, zu codieren. Ein erster Costas-Code kann demnach das erste Teilsignal des Ortungssignals codieren und ein zweiter Costas-Code kann das zweite Teilsignal des Ortungssignals codieren. Die Verwendung eines Costas-Codes ist vorteilhaft, da dieser neben der bereits beschriebenen guten räumlichen Auflösung durch die beschriebene Orthogonalität der Teilsignale des Sendesignals zueinander, zusätzlich eine gute Frequenzauflösung in dem Bereich der Dopplerfrequenz bzw. der Dopplerverschiebung ermöglicht.

Gemäß Ausführungsbeispielen kann der Ortungssignalcodierer ausgebildet sein, die Dauer eines mit einer gleichen Frequenz modulierten Zeitabschnitts kleiner als ein Fünftel bzw. kleiner als ein Fünfzigstel bzw. kleiner als ein Hundertstel der Periodendauer des Ortungssignals zu wählen. Vorteilhaft bei einer kurzen Teilpulsdauer (engl.: sub-pulse bzw. sub-carrier duration) im Vergleich zu dem Sendesignal ist, dass das Spitze-zu-Nebenkeulenverhältnis (engl.: peak-to-sidelobe ratio) der Mehrdeutigkeitsfunktion verbessert wird.

Weitere Ausführungsbeispiele beschreiben eine Ortungsvorrichtung mit einem Ortungssignalcodierer und einem Ortungssignalempfänger, der ausgebildet ist, ein Ortungssignal, das mit einem Ortungssignalcodierer erzeugt wurde, zu empfangen. Ferner umfasst die Ortungsvorrichtung einen Ortungssignalkomparator, der ausgebildet ist, das empfangene Ortungssignal mit dem gesendeten Ortungssignal zu vergleichen, beispielsweise eine Kreuzkorrelation auszuführen. Gemäß weiterer Ausführungsbeispiele kann die Ortungsvorrichtung einen Ortungssignalerzeuger umfassen, der ausgebildet ist, ein Ortungssignal mit einem ersten und einem zum ersten Teilsignal orthogonalen zweiten Teilsignal zu erzeugen.

Weitere Ausführungsbeispiele zeigen die Ortungsvorrichtung mit einem Positionsbestimmer und/oder einem Geschwindigkeitsbestimmer, der bzw. die ausgebildet ist bzw. sind, eine Position bzw. eine Geschwindigkeit eines Objekts, an dem das gesendete Ortungssignal reflektiert ist, anhand eines Ausgangssignals des Ortungssignalkomparators zu bestimmen.

Ein weiteres Ausführungsbeispiel zeigt ein Verfahren zur Codierung eines Ortungssignals mit einem ersten und einem zu dem ersten Teilsignal orthogonalen zweiten Teilsignal mit Codieren des Ortungssignal mit einem Ortungssignalcodierer in einem ersten und einem zweiten Teilbereich, wobei das Codieren des ersten Teilsignals, das den ersten Teilbereich und einen Abschnitt des zweiten Teilbereichs einnimmt, einen ersten Codierparameter und das Codieren des zweiten Teilsignals, der den Rest des zweiten Teilbereichs einnimmt, einen zweiten Codierparameter umfasst.

Ausführungsbeispiele beschreiben ein Verfahren zur Ortung eines Objekts mit Empfangen eines Ortungssignals mit einem Ortungssignalempfänger und Vergleichen des empfangenen und des gesendeten Ortungssignals mit einem Ortungssignalkomparator.

Bevorzugte Ausführungsbeispiele der vorliegenden Anmeldung werden nachfolgend Bezug nehmend auf die beiliegenden Zeichnungen näher erläutert. Es zeigen:

Fig. 1   eine schematische Darstellung eines Ortungssignalcodierers für eine Ortungsvorrichtung;

Fig. 2   ein schematisches Blockdiagramm einer Ortungsvorrichtung;

Fig. 3   ein schematisches Zeitdiagramm einer Übertragung eines langen Pulses und den Empfang eines Fernreichweitenechos;

Fig. 4   ein schematisches Zeitdiagramm einer Übertragung eines langen Pulses und den Empfang eines Nahreichweitenechos;

Fig. 5   eine schematische Darstellung eines Ortungssignals;

Fig. 6a-d   eine schematische Darstellung eines gesendeten Ortungssignals mit den zugehörigen empfangenen Ortungssignalen, die von einem Objekt aus drei verschiedenen Entfernungen reflektiert sind;

Fig. 7   ein schematisches Zeit-Frequenz-Diagramm eines Costas-Codes;

Fig. 8   eine Mehrdeutigkeitsfunktion des Costas-Codes $C_{1,(6)}$ der Länge N=6, unter Berücksichtigung von zeitlichen Verschiebungen eines Mehrfachen eines Teilpulses;

Fig. 9   eine schematische Darstellung eines beispielhaften Costas-codierten Ortungssignals mit einer Verkettung von M=2 unterschiedliche Costas-Codes über der Zeit;

Fig. 10   den schematischen Signalverlauf des reflektierten Signals eines Objekts im Nahbereich ($R_{NEAR}$) aus Fig. 6b in einer schematischen Mehrdeutigkeitsfunktion über der Zeit und der Dopplerfrequenz;

Fig. 11   den schematischen Signalverlauf des reflektierten Signals eines Objekts im Bereich zwischen $R_{NEAR}$ und $R_{FAR}$ aus Fig. 6c in einer schematischen Mehrdeutigkeitsfunktion über der Zeit und der Dopplerfrequenz;

Fig. 12   den schematischen Signalverlauf des reflektierten Signals eines Objekts im Fernbereich ($R_{FAR}$) aus Fig. 6d in einer schematischen Mehrdeutigkeitsfunktion über der Zeit und der Dopplerfrequenz;

Fig. 13   eine schematische Darstellung des PSLR über der Reichweite;

Fig. 14   ein schematisches Blockdiagramm eines Verfahrens zur Codierung eines Ortungssignals; und

Fig. 15   ein schematisches Blockschaltbild eines Verfahrens zur Ortung eines Objekts.

In der nachfolgenden Beschreibung der Figuren werden gleiche oder gleichwirkende Elemente mit den gleichen Bezugszeichen versehen, so dass deren Beschreibung in den unterschiedlichen Ausführungsbeispielen untereinander austauschbar ist.

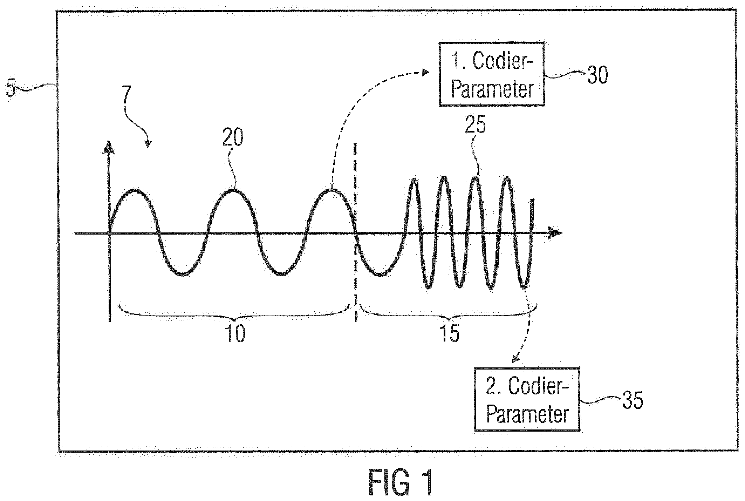

Fig. 1 zeigt eine schematische Darstellung eines Ortungssignalcodierers 5 für eine Ortungsvorrichtung. Der Ortungssignalcodierer 5 arbeitet mit einem Ortungssignal 7, das ein erstes Teilsignal 20 und ein zu dem ersten Teilsignal 20 orthogonales zweites Teilsignal 25 aufweist. Der Ortungssignalcodierer 5 ist ausgebildet, das Ortungssignal 7 in einem ersten und einem zweiten Teilbereich 10, 15 zu kodieren, wodurch die Orthogonalität generiert werden kann. Das Codieren des ersten Teilsignals 20, das den ersten Teilbereich 10 und einen Abschnitt des zweiten Teilbereichs 15 einnimmt, umfasst einen ersten Codierparameter 30. Das Codieren des zweiten Teilsignals 25, das den Rest des zweiten Teilbereichs 15 einnimmt, umfasst einen zweiten Codierparameter 35. Das im zweiten Teilbereich 15 codierte Ortungssignal 7 ist ferner orthogonal zu jedem möglichen Teil des Ortungssignals 7, da bereits die Teilsignals 20, 25 zueinander orthogonal sind. Das Ortungssignal 7 kann ein Radarsignal bzw. ein Radarpuls sein, der die oben genannten Eigenschaften aufweist.

Anders ausgedrückt ist das Ortungssignal 7 eine Verkettung von orthogonalen Teilsignalen 20, 25. Die Teilsignale 20, 25 werden mit einem sich voneinander unterscheidenden Code codiert bzw. moduliert. Als Code kann z. B. ein Costas Code verwendet werden, der eine angemessene Länge für die Codierung aufweist. Ferner kann das Ortungssignal 7 in zwei Bereiche eingeteilt sein, einen ersten Teilbereich und einen zweiten Teilbereich 10, 15. Vorzugsweise ist der erste Teilbereich 10 ein vorderer Teil und der zweite Teilbereich 15 ein hinterer Teil. Die Reihenfolge kann jedoch auch vertauscht werden. Der hintere Teilbereich ist der Teil im Ortungssignal 7, der beispielsweise bei einer Radarortung zur Detektion eines Objekts vorteilhaft ist. Die Signale beschreiben demnach einen vollständigen Costas Code während die Bereiche die Spezifikation für eine Objektortung festlegen.

Ausführungsbeispiele zeigen, dass das erste und das zweite Teilsignal 20 und 25 (und somit auch das im ersten und das im zweiten Teilbereich 10, 15 codierte Ortungssignal 7) die gleiche Bandbreite aufweisen, wobei Abweichungen der Bandbreiten der zwei Teilsignale, die innerhalb der beispielsweise bei Radaranwendungen gängigen Toleranz liegen, als gleiche Bandbreite angesehen werden. Die gleiche Bandbreite liegt z. B. vor, wenn die Bandbreite des zweiten Teilsignals beispielsweise um maximal 1% bzw. maximal 3% bzw. maximal 5% von der Bandbreite des ersten Teilsignals abweicht. Somit kann die volle Reichweitenauflösung eines Objekts erreicht werden, selbst wenn es so dicht an der Ortungsvorrichtung positioniert ist (z. B. in der Entfernung $R_{NEAR}$), dass nach dem Senden des Ortungssignals nur die Reflexion des zweiten Teilbereichs 15 von der Ortungsvorrichtung empfangen werden kann. Der zweite Teilbereich 15 bzw. der hintere Teilbereich umfasst das komplette Teilsignal 25, welches die komplette Bandbreite des Sendesignals 7 aufweist. Anders ausgedrückt sollte das zweite Teilsignal 25 kürzer sein als der zweite Teilbereich 15. Somit kann durch den Empfang des hinteren Teilbereichs 15 bereits eine vollständige Reichweitenauflösung erreicht werden.

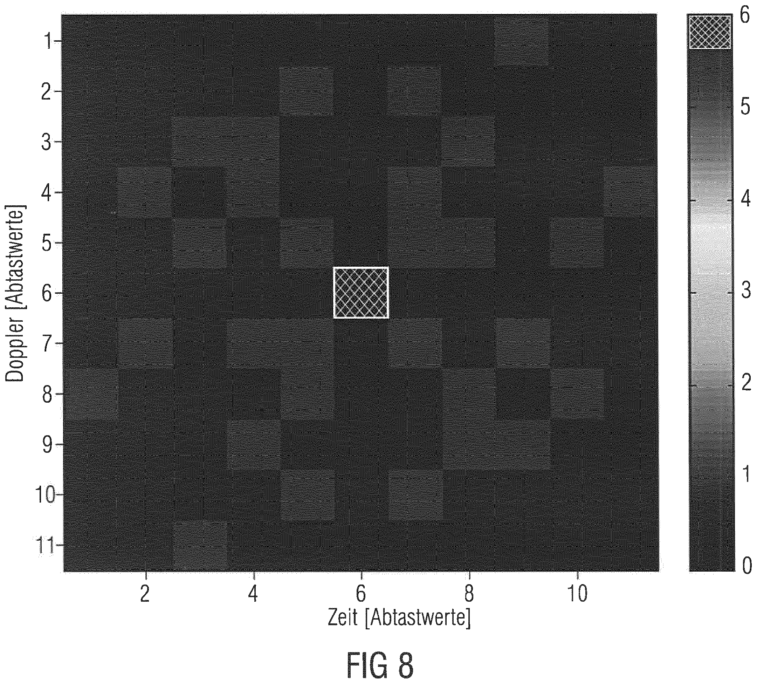

Wie erwähnt, wird das Ortungssignals 7 codiert. Gemäß Ausführungsbeispielen ist das erste Teilsignal 20 und das zweite Teilsignal 25 mit einem Code unterschiedlicher Länge codiert. Zur Codierung des Ortungssignals 7 kann ein frequenzmodulierendes Codierverfahren, beispielsweise ein Costas-Code eingesetzt werden. Demnach kann das erste Teilsignal 20 des Ortungssignals 7 mit einem ersten Costas-Code und das zweite Teilsignal 25 des Ortungssignals 7 mit einem zweiten Costas-Code codiert sein. Neben der bereits beschriebenen guten räumlichen Auflösung ermöglicht die Codierung des Ortungssignals 7 mit einem Code, der eine Reißzwecken-Mehrdeutigkeitsfunktion (engl.: thumbtack ambiguity function) aufweist, wie z. B. ein Costas-Code, ferner eine gute Auflösung der Dopplerfrequenz. In Kombination der beiden Eigenschaften kann so ein sich schnell bewegendes Objekt durch Aussenden eines Ortungssignals in der Entfernung und, abgeleitet von der Dopplerfrequenz, in der Geschwindigkeit bestimmt werden. Die Güte der Mehrdeutigkeitsfunktion kann weiter verbessert werden, indem die Dauer eines mit einer gleichen Frequenz modulierten Zeitabschnitts kleiner als ein Fünftel bzw. kleiner als ein Fünfzigstel bzw. kleiner als ein Hundertstel der Periodendauer des Ortungssignals gewählt wird. Anders ausgedrückt, sollte die Teilpulsdauer im Vergleich zu der Periode des Ortungssignals gering gehalten werden, um das Spitze-zu-Nebenkeulen-Verhältnis der Mehrdeutigkeitsfunktion ausreichend niedrig zu halten. Dies wird später Bezug nehmend auf Fig. 8 näher erläutert. Ferner ist anzumerken, dass der erste Teilbereich 10 ein vorderer Teil ("fore part") des Ortungssignals 7 und der zweite Teilbereich 15 ein hinteres Teilsignal ("aft part") des Ortungssignals 7 sein kann, oder dass der erste Teilbereich 10 der hintere Teil des Ortungssignals 7 und der zweite Teilbereich 15 der vordere Teil des Ortungssignals 7 ist.

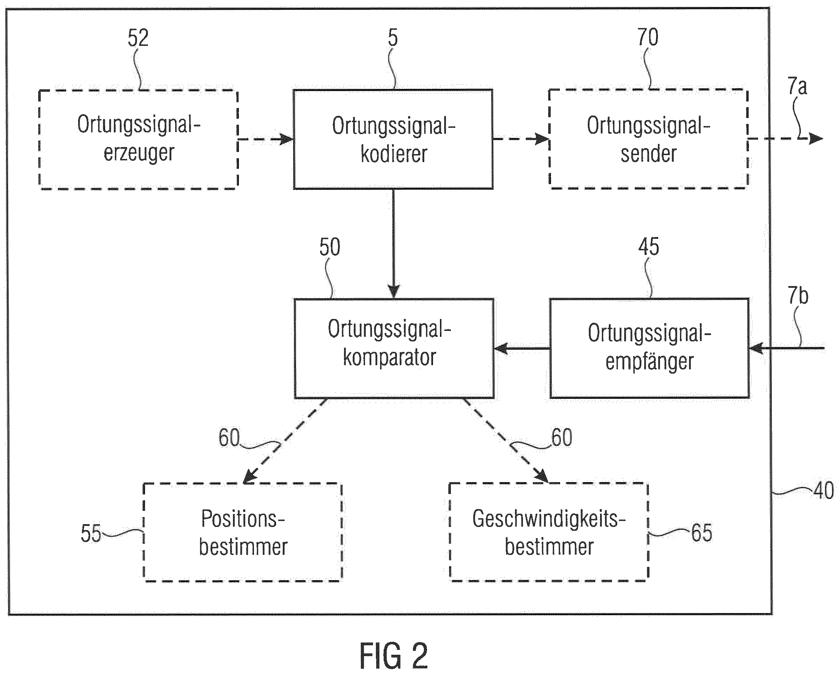

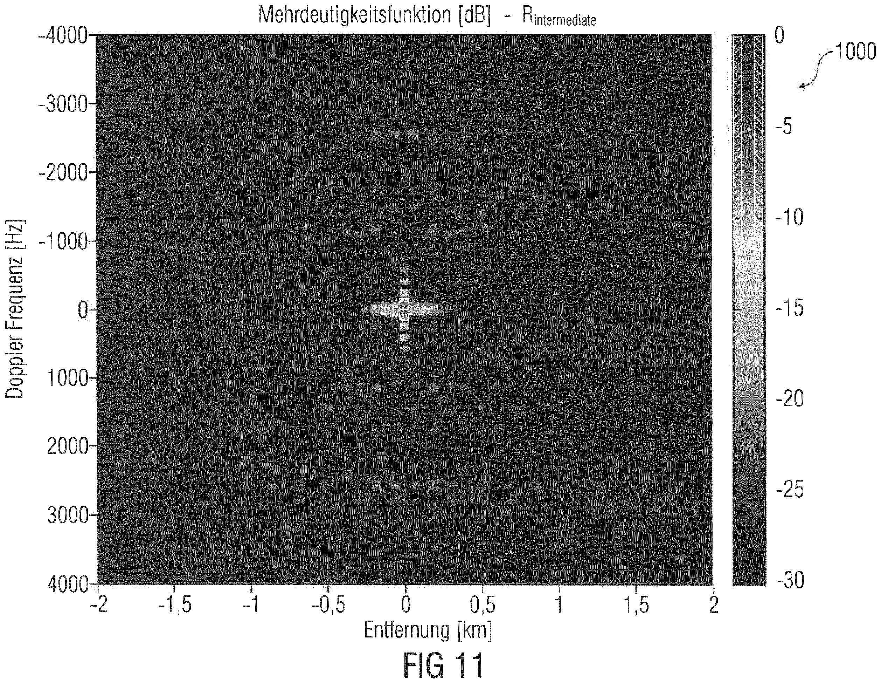

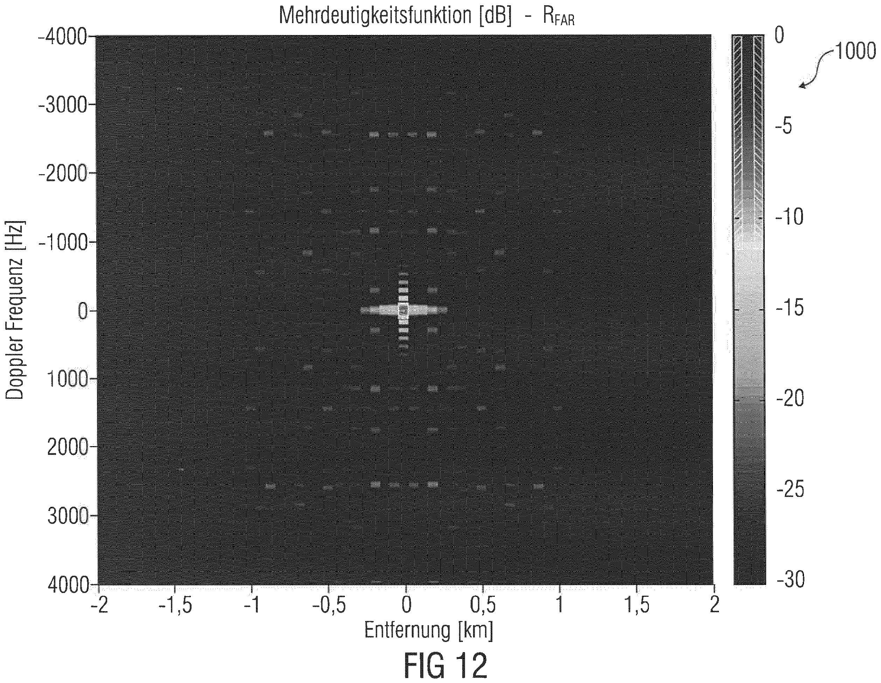

Fig. 2 zeigt ein schematisches Blockdiagramm einer Ortungsvorrichtung 40. Die Ortungsvorrichtung 40 umfasst den anhand der Fig. 1 beschriebenen Ortungssignalcodierer 5 und einen Ortungssignalempfänger 45, der ausgebildet ist, das Ortungssignal 7, das mit dem Ortungssignalcodierer 5 erzeugt wurde, zu empfangen. Ferner kann die Ortungsvorrichtung 40 einen Ortungssignalkomparator 50 umfassen, der ausgebildet ist, eine Kreuzkorrelation des empfangenen Ortungssignals 7b mit dem gesendeten Ortungssignal 7a durchzuführen. Aus der Kreuzkorrelation bzw. allgemein dem Vergleich des gesendeten Ortungssignals 7a und des empfangenen Ortungssignals 7b kann die Mehrdeutigkeitsfunktion, die in verschiedenen Ausführungen in Fig. 8 sowie Fig. 10-12 gezeigt ist, abgeleitet werden. Ist das gesendete Ortungssignal 7a beispielsweise Costas-codiert, kann aus der Mehrdeutigkeitsfunktion direkt die Entfernung sowie die Dopplerfrequenz und daraus abgeleitet die Geschwindigkeit eines zu detektierenden Objekts bestimmt werden.

Weitere Ausführungsbeispiele zeigen die Ortungsvorrichtung 40 mit einem Ortungssignalerzeuger 52, der ausgebildet ist, ein Ortungssignal 7a mit einem ersten und einem zu dem ersten Teilsignal 20 orthogonalen zweiten Teilsignal 25 zu erzeugen (vgl. Fig. 1).

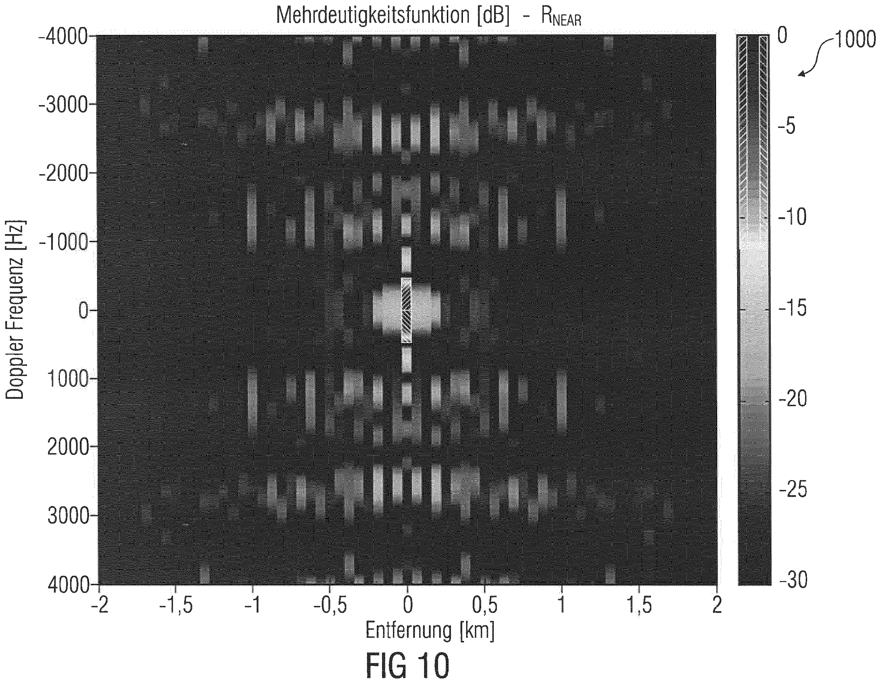

Weitere Ausführungsbeispiele zeigen die Ortungsvorrichtung 40 mit einem Positionsbestimmer 55, der ausgebildet ist, die Position eines Objekts, an dem das gesendete Ortungssignal 7a reflektiert ist, anhand eines Ausgangssignals 60 des Ortungssignalkomparators 50 zu bestimmen. Der Positionsbestimmer kann ein Objekt anhand einer Mehrdeutigkeitsfunktion lokalisieren und anhand einer Verschiebung des Maximalwerts die Position eines Objekts, das das gesendete Ortungssignal 7a reflektiert hat, zu bestimmen. Eine Mehrdeutigkeitsfunktion ist beispielhaft in den Fig. 10-12 gezeigt.

Ausführungsbeispiele zeigen ferner einen Geschwindigkeitsbestimmer 65, der ausgebildet ist, die Geschwindigkeit eines Objekts, an dem das gesendete Ortungssignal 7a reflektiert ist, anhand des Ausgangssignals 60 des Ortungssignalkomparators 50 zu bestimmen. Die Bestimmung der Geschwindigkeit verläuft ähnlich wie die Bestimmung der Position anhand der Mehrdeutigkeitsfunktion. Beispielsweise kann eine relative Position zum Ortungsvorrichtung 40 auf einer X-Achse der Mehrdeutigkeitsfunktion abgelesen werden und die Dopplerfrequenz, aus der eine Geschwindigkeit des zu detektierenden Objekts hergeleitet werden kann, auf einer Y-Achse der Mehrdeutigkeitsfunktion abgelesen werden. Ebenso ist eine umgekehrte Zuordnung der Achsen bezüglich relativer Position und Dopplerfrequenz möglich.

Analog zum Ortungssignalempfänger 45, der ein Ortungssignal 7b empfangen kann, kann die Ortungsvorrichtung 40 einen Ortungssignalsender 70 umfassen, der das Ortungssignal 7a aussendet.

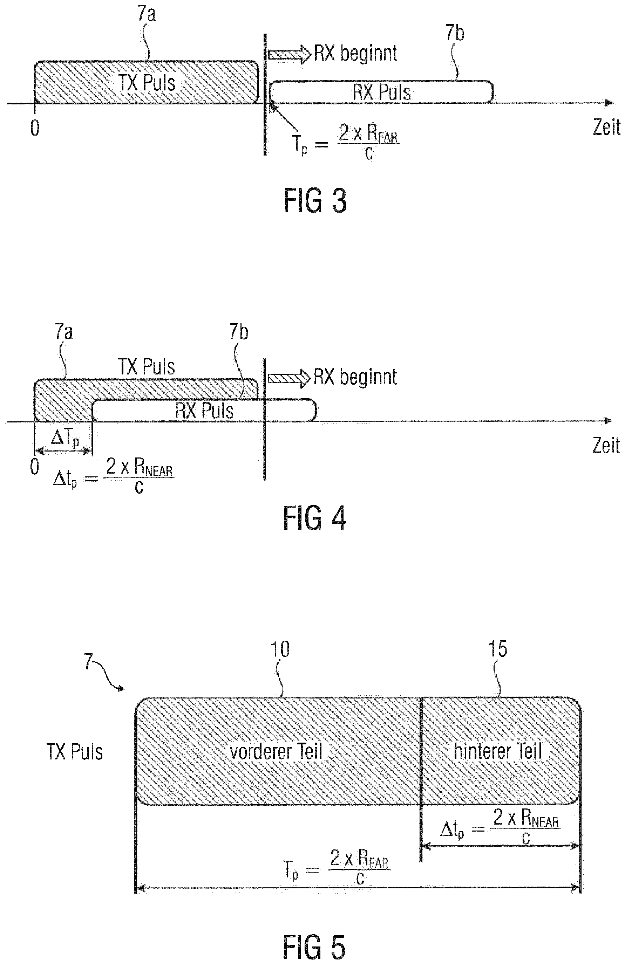

Fig. 3 zeigt ein schematisches Zeitdiagramm einer Übertragung eines langen Pulses, beispielsweise des gesendeten Ortungssignals 7a (TX Puls bzw. übertragenes Signal), das durch den anhand von Fig. 1 beschriebenen Ortungssignalcodierer 5 erzeugt wurde. Ferner zeigt Fig. 3 den Empfang eines Fernreichweitenechos, beispielsweise des empfangenen Signals 7b (RX Puls bzw. empfangenes Signal). Das gesendete Ortungssignal 7a und das empfangene Ortungssignal 7b sind anhand von Fig. 2 bezugnehmend auf die Ortungsvorrichtung 40 gezeigt. Die Markierung "RX beginnt" zeigt den Zeitpunkt, ab dem eine Ortungsvorrichtung 40 bereit ist, ein reflektiertes Ortungssignal 7b zu empfangen. Der Zeitpunkt, ab dem das reflektierte Signal 7b bei der Ortungsvorrichtung eintreffen kann, wird mit $T_p$ be-

$$T_p = \frac{2 \, x \, R_{FAR}}{c},$$

zeichnet und berechnet sich zu wobei $R_{FAR}$ die minimale Entfernung eines Objekts ist, für die die Ortungsvorrichtung den vollständigen gesendeten Impuls wieder empfangen kann. c beschreibt ferner die Ausbreitungsgeschwindigkeit des gesendeten Ortungssignals 7a, beispielsweise annähernd Lichtgeschwindigkeit unter Normbedingungen in Luft.

Um die Energie zu maximieren, die an das Fernreichweitenziel gesendet wird, ist die übertragene Pulsdauer nur etwas kürzer eingestellt, als die Umlaufzeit des Signals, das durch das am weitesten entfernte Ziel reflektiert wird. Anders ausgedrückt, die Zeitlücke zwischen dem Ende der Übertragung und dem Beginn des Empfangs ist aufgrund von technologischen Beschränkungen reduziert. Durch geeignetes Auswählen der Pulsmodulation können Ziele bzw. Objekte mit der fernsten Reichweite $R_{FAR}$ mit einem Filter verarbeitet werden, das an den gesamten gesendeten Puls angepasst ist, womit eine angemessene Reichweitenkomprimierungsverstärkung bzw. eine gute Auflösung und ein gutes Spitze-zu-Nebenkeulenverhältnis erhalten werden. Dieser Fall ist in Fig. 3 dargestellt. Wenn in der gleichen Situation ein Echo von einem näheren Ziel empfangen wird, ist nur ein Teil des gesendeten Pulses beim Empfang verfügbar (siehe Fig. 4). In diesem letzteren Fall könnte jedes Reichweitenecho mit dem entsprechenden sichtbaren Teil des empfangenen Pulses angepasst filtern bzw. mit einem Optimalfilter (engl.: matched filter) filtern, was somit zu einem rechenmäßig intensiven Verarbeitungsschema führt (z.B. jede Reichweite sollte ihre eigene Angepasstes-Filter-Referenzfunktion bzw. ihren eigenen Optimalfilter haben).

Alternativ kann ein Fehlanpassungsfilterschema (engl.: mis-matched filter), also kein Optimalfilter, in Betracht gezogen werden, bei dem alle Reichweitenechos mit einer eindeutigen Referenzfunktion gefiltert werden. Bevor dieser zweite Lösungsansatz angewendet wird, müssen die Fehlanpassungsverluste bezüglich SNR-, Auflösungs- und Spitze-Nebenkeulen-Verhältnis-(PSLR-) Verschlechterungen genau analysiert werden. Falls diese Fehlanpassungsverluste annehmbar sind, ist das Reichweitenkomprimierungsschema nicht beeinträchtigt (das heißt eine einzige Referenzfunktion basierend auf dem gesendeten Signal wird für die Reichweitenkomprimierung verwendet). Selbstverständlich muss in diesem Fall ein angemessener Signalverlauf entworfen werden. Der gesendete Puls wird zweckmäßigerweise in zwei Teile bzw. Bereiche geteilt, nämlich einen vorderen und hinteren Teil 10, 15, wie es in Fig. 5 skizziert ist.

Fig. 4 zeigt ein schematisches Zeitdiagramm einer Übertragung eines langen Pulses, beispielsweise des gesendeten Ortungssignals 7a und den Empfang eines Nahreichweitenechos, beispielsweise eines Teils des empfangene Ortungssignals 7b. Wie bereits beschrieben tritt der in Fig. 4 gezeigte Fall ein, wenn ein Objekt näher als $R_{FAR}$ an der Ortungsvorrichtung positioniert ist. Da die Ortungsvorrichtung nicht simultan senden und empfangen kann, kann die Ortungsvorrichtung nur einen Teil des reflektierten Ortungssignals 7b empfangen bzw. verarbeiten.

Fig. 5 zeigt eine beispielhafte schematische Darstellung des Ortungssignals 7. Das Ortungssignal 7 ist in den ersten Teilbereich 10, hier als vorderer Teil ("fore part") dargestellt und einen zweiten Teilbereich 15, hier als hinterer Teil ("aft part") dargestellt, aufgeteilt. Der

$$\Delta T_p = \frac{2 \times R_{NEAR}}{c}$$

hintere Teil 15 weist eine Dauer von

auf, die durch die Ausbreitungsgeschwindigkeit des Ortungssignals sowie die Entfernung $R_{NEAR}$ eines nächstmöglichen zu detektierenden Objekts beschrieben wird. Das gesamte Ortungssignal 7 hat eine Länge von

$$T_p = \frac{2 \times R_{FAR}}{c},$$

wobei c wiederum die Ausbreitungsgeschwindigkeit des Ortungssignals beschreibt und $R_{FAR}$ eine Entfernung eines Objekts ist, dessen reflektiertes Ortungssignal gerade vollständig von der Ortungsvorrichtung empfangen werden kann.

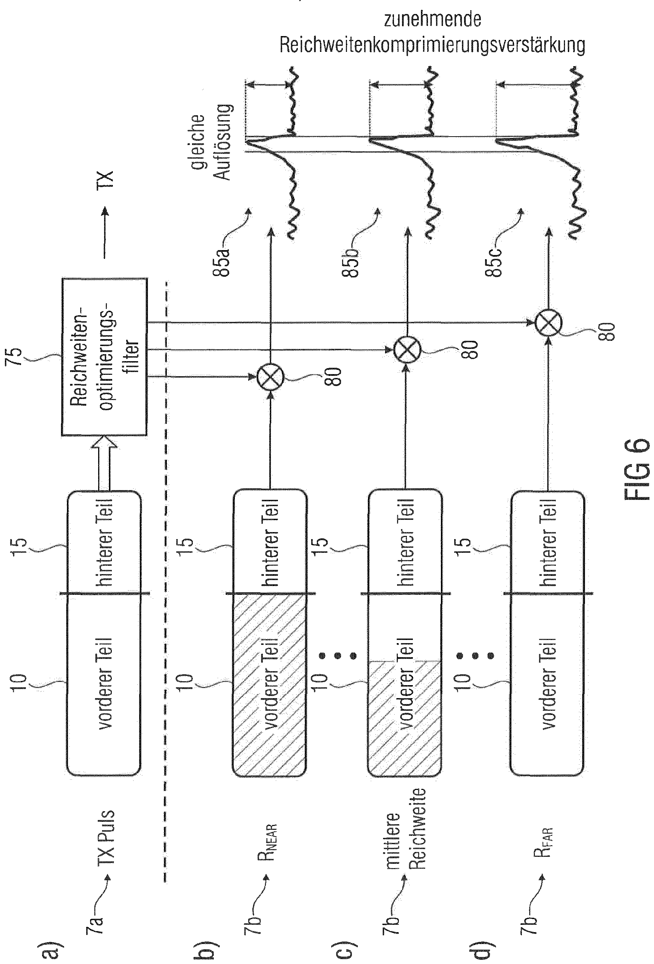

Gemäß Ausführungsbeispielen ist die gesamte Dauer des Pulses $T_p$ gleich gewählt wie die Signalumlaufzeit von dem Radar zu dem weitesten Ziel (oder etwas kürzer) und zurück, während die Dauer $\Delta T_p$ des hinteren Teils 15 gleich gewählt ist wie die Signalumlaufzeit von dem Radar zu dem nächsten Ziel von Interesse (oder etwas länger) und zurück. Darüber hinaus ist gemäß Ausführungsbeispielen folgendes vorgesehen: (i) der hintere Teil 15 zeigt die volle Bandbreite des gesamten Pulses 7 (z.B. in der Zeit $\Delta T_p$ sollte die gleiche Bandbreite umspannt werden wie bei $T_p$); (ii) der hintere Teil ist orthogonal zu allen möglichen Bruchteilen des vorderen Teils. Bruchteile sind beispielsweise Signalanteile in Zeitschlitzen bzw. Zeitabschnitten eines digitalisierten Signals, die durch eine Abtastung des analogen Signals erzeugt werden. Die Orthogonalitätsanforderung bezieht sich demnach auf jede mögliche Kombination bzw. Sequenz von aufeinanderfolgenden Zeitschlitzen, die ein von einem Objekt reflektiertes Signal aufweisen kann. Dies ist vorteilhaft, da die Entfernung und daher die Länge bzw. die Anzahl der Zeitschlitze in dem reflektierten Signal nicht bekannt ist. Falls diese zwei Bedingungen erfüllt sind, ermöglicht der Empfang lediglich des hinteren Teils (wie es für ein Nahreichweiteecho der Fall ist) eine Vollreichweitenauflösung. Zusätzlich dazu gewährt der Empfang des hinteren Teils und eines Bruchteils des vorderen Teils (wie es für jedes Zwischenreichweiteecho der Fall ist) eine konstante Rauschleistung und konstante Form der Pulsantwort, wobei der letzte Teil durch die Orthogonalität zwischen vorderem und hinterem Teil ermöglicht wird. Diese Situation ist in Fig. 6a-d dargestellt, wo ein einziges Reichweitenkomprimierungsfilter 75 verwendet wird, um Rücksendungen bzw. Reflektionen aus jeder Reichweite zu verarbeiten.

Fig. 6a zeigt einen Sendeimpuls 7a (TX Puls), der in den vorderen Teil 10 und den hinteren Teil 15 aufgeteilt ist und wie bereits beschrieben, codiert sein kann. Der Reichweitenkomprimierungsfilter (oder Reichweitenoptimierungsfilter) 75 ist beispielsweise ein Speicher, der den Sendeimpuls 7a speichert. Die eigentliche Reichweitenkomprimierung erfolgt durch eine Kreuzkorrelation des empfangenen Ortungssignals 7b mit dem konjugiert komplexen Sendeimpuls 7a. Die Kreuzkorrelation kann vorteilhaft im Frequenzbereich mit einem Multiplikator 80 als Multiplikation des Fourier-transformierten empfangenen Ortungssignals 7b mit dem Fourier-transformierten, konjugiert komplexen Sendeimpuls 7a ausgeführt werden.

Fig. 6b zeigt einen Empfangsimpuls aus einer Nahdistanz. Das gesendete Ortungssignal 7a wurde in einer Entfernung $R_{NEAR}$ reflektiert. Die Schraffur des empfangenen Ortungssignals 7b deutet an, dass dieser Teil von der Ortungsvorrichtung 40 nicht empfangen wurde, da dieser das Senden des Ortungssignal 7a noch nicht beendet hat. Das empfangene Ortungssignal 7b wird, wie im Vorhinein beschrieben, durch den Multiplikator 80 mit dem konjugiert komplexen Sendeimpuls 7a multipliziert bzw. kreuzkorreliert. Durch die Costas-Codierung wird trotz des in diesem Fall nicht angepassten Filters, wie im Folgenden näher beschrieben, ein niedriges Nebenkeulenniveau in Bezug zum eigentlichen Echo erreicht. Es erfolgt keine explizite Decodierung bzw. Demodulation der Costas-Codierung. 85a zeigt einen beispielhaften Signalverlauf des demodulierten bzw. decodierten empfangenen Ortungssignals 7b.

Fig. 6c zeigt einen Empfangsimpuls aus einer mittleren Distanz. Das gesendete Ortungssignal 7a wurde in einer Entfernung $R_{INTERMEDIATE}$ reflektiert. Die Schraffur des empfangenen Ortungssignals 7b deutet an, dass dieser Teil von der Ortungsvorrichtung 40 nicht empfangen wurde, da dieser das Senden des Ortungssignal 7a noch nicht beendet hat. Im Vergleich zu dem in Fig. 6b gezeigten Ortungssignal, ist dieser Bereich kleiner, d. h. es wird auch Teilstück des vorderen Teils 10 empfangen. Die Signalverarbeitung verläuft äquivalent zu der bezüglich Fig. 6b beschriebenen Signalverarbeitung. 85b zeigt einen beispielhaften Signalverlauf des demodulierten bzw. decodierten empfangenen Ortungssignals 7b.

Fig. 6d zeigt einen Empfangsimpuls aus einer Ferndistanz. Das gesendete Ortungssignal 7a wurde in einer Entfernung $R_{FAR}$ reflektiert. Im Vergleich zu dem in Fig. 6b und Fig. 6c wird hier das komplette Ortungssignal 7b empfangen. Das empfangene Ortungssignal 7b wird mit einem zum Reichweitenoptimierungsfilter äquivalenten Filter 80 demoduliert bzw. decodiert. 85c zeigt einen beispielhaften Signalverlauf des demodulierten bzw. decodierten empfangenen Ortungssignals 7b. Wird ein Signal von einem Objekt reflektiert, dass weiter als $R_{FAR}$ von der Ortungsvorrichtung entfernt ist, so stellt die Reichweitenoptimierung einen Optimalfilter beziehungsweise eine angepasste Filterung dar.

Jede reichweitenkomprimierte Ausgabe 85a-c zeigt die gleiche Auflösung, während sich die Reichweitenkomprimierungsverstärkung mit der Reichweite erhöht (bei fernen Reichweiten wird mehr Energie aufgenommen). Die Orthogonalität zwischen vorderem und hinterem Teil ermöglicht, dass abgesehen von der zunehmenden Reichweitenkomprimierungsverstärkung, die Pulsantwort über die Reichweite eine ähnliche Form beibehält. In den nachfolgenden Abschnitten wird näher beschrieben, wie diese Orthogonalität erreicht werden kann.

Im Folgenden wird genauer auf den Einfluss der Doppler Verschiebung eingegangen. Die Dopplermodulation ist beträchtlich, wenn sich sehr schnell bewegende Ziele betrachtet werden. Dies bedeutet, dass die Dopplerfrequenz auch in der kurzen Zeit deutlich sichtbar ist. Ferner wäre die sogenannte "Reichweite/Dopplerkopplung" (engl.: range/doppler coupling) sichtbar, falls ein Signalverlauf mit einer "Stegtyp" Mehrdeutigkeitsfunktion (engl.: ridge type ambiguity function) gewählt wird. Ein Signalverlauf mit einer Reißnagelmehrdeutigkeitsfunktion (engl.: thumbtack ambiguity function) löst die Reichweite/Dopplerkopplung und stellt eine grobe eindeutige Dopplerschätzung bereit, die für eine nachfolgende zeitliche kohärente Verarbeitung sinnvoll ist.

Ausführungsbeispiele beschreiben die Nutzung von Radarsignalverläufen, die auf einer geeigneten Verkettung von Signalen basieren, die gemäß Costas-Codes ([1]) moduliert und für die gleichzeitige Überwachung von sehr schnellen Zielen über ein großes Intervall von Reichweiten optimiert sind.

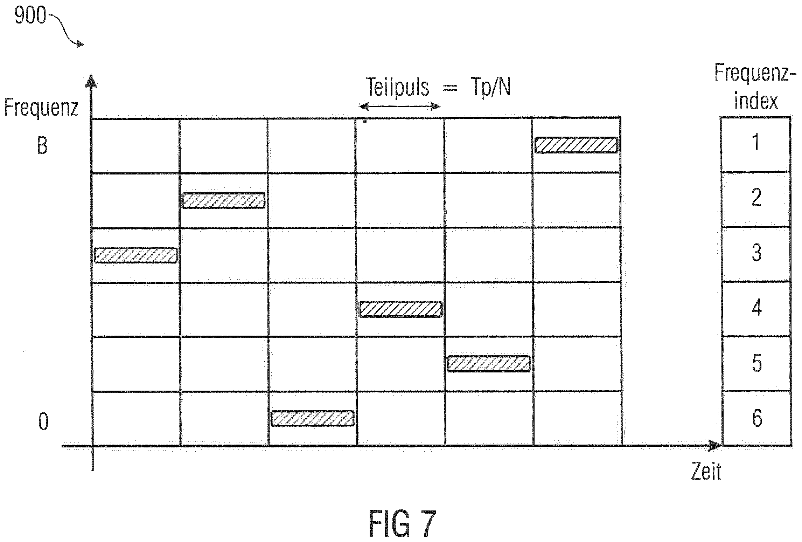

Fig. 7 zeigt ein schematisches Zeit-Frequenz-Diagramm 900 eines Costas-Codes. Costas-Codes werden verwendet, um Frequenzsprungcodes in abgestuften Frequenzmodulationen zu erzeugen. Im Unterschied zu Barker-Codes können lange Costas-Codes erzeugt werden, die es ermöglichen, lange Ortungssignale 7 zu kodieren. Signale, die durch Costas-Codes erzeugt werden, haben eine Reißnagelmehrdeutigkeitsfunktion, keine Reichweite/Dopplerkopplung und sehr niedrigen Nebenkeulen. Der gesamte Puls ist in N Teilpulse unterteilt. Von den N möglichen Frequenzen (oder Unterträger bzw. Sub-Carrier) wird eine Frequenz für jeden Teilpuls verwendet, wobei jede Frequenz nur einmal ohne Wiederholung verwendet wird. Anders ausgedrückt, ein einfaches sinusförmiges Signal mit einem anderen Frequenzunterträger (engl.: frequency sub-carrier) wird bei jedem Teilpuls übertragen [2]. Fig. 7 zeigt das Zeit-Frequenz-Diagramm des Costas-Code $C_{1,(6)} = \{3, 2, 6, 4, 5, 1\}$ der Länge N=6.

Fig. 8 zeigt eine Mehrdeutigkeitsfunktion des Costas-Codes $C_{1,(6)}$ der Länge N=6, unter Berücksichtigung von zeitlichen Verschiebungen eines Mehrfachen eines Teilpulses. Die Mehrdeutigkeitsfunktion zeigt eine Amplitude des Vergleichs, z. B. der Kreuzkorrelation, des gesendeten und des empfangenen Ortungssignals 7a und 7b als Codierung über der Zeit und der Dopplerverschiebung. Wenn Costas-Codes berücksichtigt werden, kann deren Mehrdeutigkeitsfunktion im (Zeit-, Doppler-) Bereich ohne weiteres abgeleitet werden durch Verschieben des entsprechenden Zeit-Frequenz-Diagramms in beiden Richtungen der Beträge gleich den Teilpulsen. Die Mehrdeutigkeitsfunktion weist im Mittelpunkt des Diagramms eine eindeutige Spitze auf, wohingegen die Nebenkeulen nur ein kleine Amplitude haben. In diesem Beispiel weist die Spitze einen Wert 6 auf wohingegen die Nebenkeulen einen Wert von 1 haben. Der Wert der Mehrdeutigkeitsfunktion für diesen spezifischen Verschiebungswert ist gegeben durch die Anzahl von zusammenfallenden Teilpulsen. Es zeigt sich, dass für Costas-Codes aufgrund einer Verschiebung von Zeit und Frequenz nicht mehr als ein Codeelement zusammenfallen kann (falls nur ganzzahlige Teilpulsverschiebungen vorkommen sind). Daher ist der maximale Nebenkeulenpegel immer 1 und der Spitzenwert ist N. Dies bedeutet, das Spitze-zu-Nebenkeulen-Verhältnis kann beliebig gering gehalten werden durch ein Erhöhen von N. Die Mehrdeutigkeitsfunktion des Costas-Codes $C_{1,(6)} = \{3, 2, 6, 4, 5, 1\}$ ist in Fig. 8 gezeigt, wo nur Verschiebungen eines Mehrfachen eines Teilpulses berücksichtigt werden.

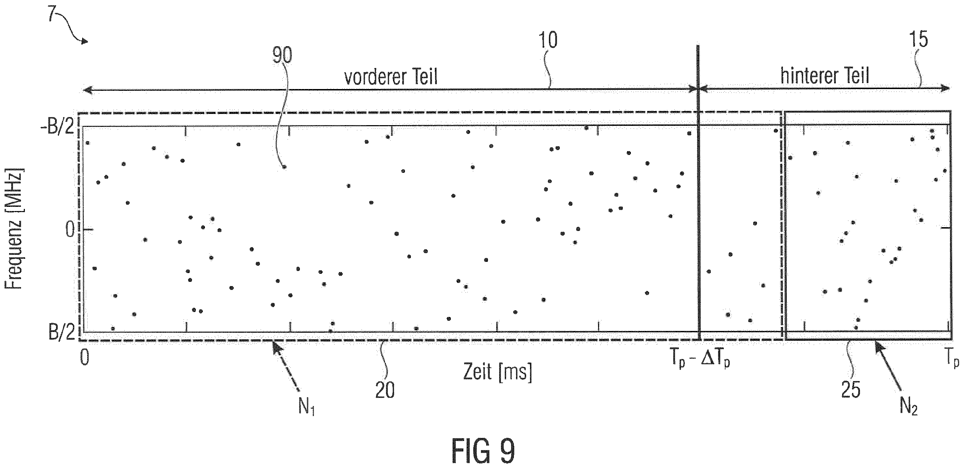

Ausführungsbeispiele zeigen die Verkettung von M=2 unterschiedlichen Costas-Codes über die Zeit. Ein beispielhaftes Ortungssignal 7 ist in Fig. 9 gezeigt. Das resultierende Signal überspannt die volle Bandbreite M=2 mal (einmal für jeden Code) auf Kosten eines Anstieges des zeitlichen Zusammenfallens von Codeelementen um den Faktor M=2. Der gesamte Puls in Fig. 9 ist unterteilt in $N_{sub} = N_1 + N_2$ Teilpulse, um zu gewährleisten, dass der Nebenkeulenpegel niedrig genug ist. Der erste Costas-Code (der Länge

$$N_1 > N_{sub} \frac{T_p - \Delta T_p}{T_p})$$

wird angelegt, um den vorderen Teil des übertragenen Pulses und einen Teil des hinteren Teils zu modulieren, während der zweite Costas-

$$(N_2 \leq N_{sub} \frac{T_p - \Delta T_p}{T_p})$$

Code (der Länge                                             an den Rest des Pulses angelegt wird.

Hier ist es von Bedeutung, die Teilpulsdauer im Vergleich zu der Periode des entsprechenden sinusförmigen Signals gering zu halten. Dadurch wird das Spitze-zu-Nebenkeulen-Verhältnis der Mehrdeutigkeitsfunktion ausreichend niedrig gehalten. Das erste und das zweite Teilsignal 20, 25 des Pulses werden vorzugsweise mit Codes unterschiedlicher Länge erhalten. Dies reduziert das Risiko jeder periodischen Struktur zwischen dem hinteren und dem vorderen Teil des Codes, womit die Orthogonalitätsanforderung aus (ii) (vgl. Beschreibung zu Fig. 5) gewährleistet wird. Vorzugsweise identifiziert der erste Code $N_1$ Unterträgerfrequenzen in dem Signal, während der zweite Code nur $N_2$ Unterträger identifiziert.

Um die technologische Implementierung zu vereinfachen (obwohl dies nicht zu der Orthogonalität zwischen vorderem und hinterem Teil des Signals beiträgt), werden die $N_2$ Unterträger des hinteren Teils vorzugsweise mit den nächsten Unterträgern aus $N_1$ approximiert. Darüber hinaus ist die Länge des zweiten Codes etwas länger gewählt als die Dauer des vorderen Teils. Es hat sich herausgestellt, dass diese Beschränkung die Höhe der Nebenkeulen leicht verringert.

Nachfolgend wird die Leistungsfähigkeit des Costas-codierten Signalverlaufs bezüglich der Mehrdeutigkeitsfunktion näher erläutert. Es wurde bereits erwähnt, dass der gewünschte Signalverlauf eine konstante Pulsantwortcharakteristik für jedes Echosignal von $R_{NEAR}$ zu $R'_{FAR}$ aufweisen sollte. Dies impliziert insbesondere eine konstante Reichweitenauflösung und ein konstantes PSLR, wenn ein Doppler-modulierter Bruchteil des gesendeten Pulses mit dem gesamten gesendeten Puls verarbeitet wird. Die Auflösung betreffend ist es ausreichend, dass der hintere Teil des Pulses (das heißt, der Teil, der immer verarbeitet wird) die gesamte Signalbandbreite überspannt. Dies wird eindeutig verifiziert für den Signalverlauf, der in dem vorhergehenden Abschnitt vorgeschlagen wird. Bezüglich des konstanten PSLR ist es notwendig, dass jeder Bruchteil des vorderen Teils den hinteren Teil nicht stört. Diese Situation kann kritisch sein, insbesondere für Echosignale von Zielen in der Nahreichweitenregion, die nur einen kleinen Bruchteil des vorderen Teils enthalten. Dieses Phänomen wurde abgeschwächt bzw. umgangen, indem die Dauer des ersten Codes $N_1$ etwas länger eingestellt wurde als die Dauer des vorderen Teils (siehe Fig. 9).

Fig. 9 zeigt eine schematische Darstellung eines beispielhaften Costas-codierten Ortungssignals 7 mit einer Verkettung von M=2 unterschiedliche Costas-Codes über der Zeit. Der Costas-Code ist durch die Punkte 90 dargestellt, wobei jede Frequenz im vorderen sowie im hinteren Teil jeweils genau einmal auftritt. Mit den dargestellten Frequenzen werden die Teilpulse des gesendeten Ortungssignals Costas-codiert. Ferner zeigt Fig. 9 die abweichende Länge des vorderen und hinteren Teils 10 und 15 im Vergleich zu dem ersten und zweiten Teilsignal 20 und 25. Das erste Teilsignal 20 ist mit einem Costas-Code der Länge $N_1$ codiert wohingegen der Costas-Code des zweiten Teilsignals eine Länge $N_2$ aufweist. Die Frequenzwerte des zweiten Costas-Codes umfassen jedoch den gleichen Frequenzbereich wie die Frequenzwerte des ersten Costas-Codes.

Um die Mehrdeutigkeitsfunktionscharakteristika über die Reichweite zu zeigen, wurden drei Reichweitenwerte berücksichtigt, nämlich $R_{NEAR}$, $R_{intermediate}$ (wobei $R_{NEAR} < R_{intermediate} < R_{FAR}$) und $R_{FAR}$. Entsprechende Mehrdeutigkeitsfunktionen 1000 (in Reichweite und Frequenz) sind in Fig. 10, 11 und 12 gezeigt. Diese Mehrdeutigkeitsfunktionen werden durch zweidimensionale Kreuzkorrelationen des gesamten Signalverlaufs (z. B. des Referenz Reichweitenkomprimierungsfilters) mit einem Bruchteil desselben, der dem sichtbaren Teil mit der gegebenen Reichweite entspricht, erhalten (vgl. 80 in Fig. 6).

Fig. 10, 11 und 12 zeigen eine simulierte Mehrdeutigkeitsfunktion 1000, die im Unterschied zu der in Fig. 8 gezeigten Mehrdeutigkeitsfunktion auch reelle Vielfache einer Teilpulsverschiebung zulässt. Diese erzeugen die höheren Nebenkeulenamplituden, die in diesem Fall auch andere Werte als 1 annehmen können. Die Amplitudenhöhe ist, wie bereits in Fig. 8 beschrieben, gemäß nebenstehender Legende codiert und über der Entfernung und der Dopplerfrequenz aufgetragen.

Im Vergleich der Figuren 10, 11 und 12 ist gezeigt, dass nicht nur die Reißnagelform beibehalten wird, sondern auch die Dopplerauflösung höher (d. h. feiner) wird, wenn sich die Zielreichweite erhöht. Dies liegt an der zunehmenden Dauer des verarbeiteten Pulses. Der mittlere Pegel der Nebenkeulen (und somit des integrierten Nebenkeulen-Verhältnisses) verringert sich, wenn sich die Reichweite erhöht.

Ferner ist anzumerken, dass die in Fig. 10-12 gezeigten Mehrdeutigkeitsfunktionen aus einer Simulation gewonnen wurden und daher keine Verschiebung des Objekts, das durch den Maximalwert der Mehrdeutigkeitsfunktion in deren Mittelpunkt beschrieben wird, zeigt. Ein reales empfangenes Ortungssignal von einem Objekt zwischen $R_{NEAR}$ und $R_{FAR}$ weist jedoch eine vom gesendeten Ortungssignal abweichende Länge auf. Um die für die Kreuzkorrelation bzw. den Vergleich der beiden Ortungssignale vorteilhafte gleiche Länge, beispielsweise die gleiche Anzahl an Abtastzeitpunkten, zu erhalten, kann das empfangene Ortungssignal mittels zero padding (dt.: Auffüllen mit Nullen) vor dem empfangenen Ortungssignalteil aufgefüllt werden. Durch das zero padding wird der Maximalwert der Korrelation in der Mehrdeutigkeitsfunktion an den Entfernungs-/Dopplerfrequenz Ort verschoben, der mit dem realen Objekt übereinstimmt.

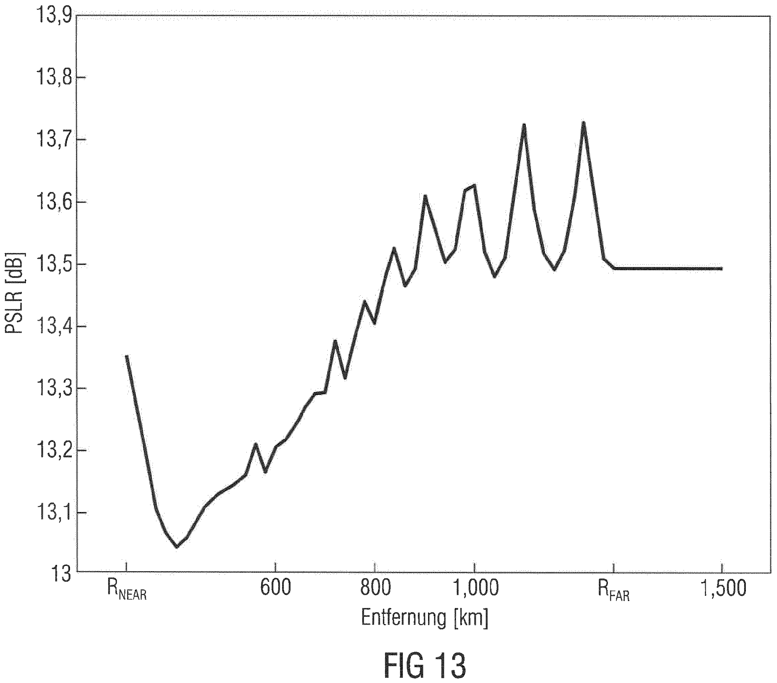

Das Verhalten des PSLR über die Reichweite ist in Fig. 13 gezeigt. Es ist naheliegend, dass das PSLR einen konstanten Wert erreicht, wenn der gesamte Puls verarbeitet wird. In dem Anfangseinschwingvorgang sind Oszillationen des PSLR innerhalb von Bruchteilen von dB begrenzt, was in den meisten Situationen toleriert werden kann. Außerdem ist der Gesamt-PSLR-Wert von etwa 13dB normalerweise annehmbar, da derselbe sich etwa des PSLR einer sich nicht verjüngenden Sinc-Pulsantwort angleicht.

Ausführungsbeispiele zeigen eine zeitliche Verkettung von Costas-Codes für einen Radarsignalverlaufsentwurf. Der Signalverlaufsentwurf ist angetrieben durch den Bedarf einer gleichzeitigen Überwachung eines großen Reichweitenausmaßes mit einem einzigen Signalverlauf. Zusätzliche Bedürfnisse bzw. Eigenschaften sind die einheitliche Pulsantwortcharakteristik über die Reichweite (Auflösung und PSLR) und eine eindeutige Zieldopplermessung mit einem einzigen gesendeten Puls. Der vorgeschlagene Signalverlauf ist in der Lage, die oben erwähnten Eigenschaften durch Verwenden einer einzigen Referenzfunktion für die Reichweitenkomprimierung, z.B. die Costas-Codierung, zu erfüllen. Die Signalverlaufsleistungsfähigkeit wird durch Mehrdeutigkeitsfunktionen in dem Reichweite-Frequenz-Bereich gezeigt. Zu diesem Zweck hat der vorgeschlagene Signalverlauf eine Reißnagelmehrdeutigkeitsfunktion, die eine eindeutige Zielgeschwindigkeitsschätzung in dem Dopplerbereich mit einem einzigen Puls ermöglicht.

Nachfolgend werden weitere Ausführungsbeispiele für die Verfahren 300 und 400 beschrieben.

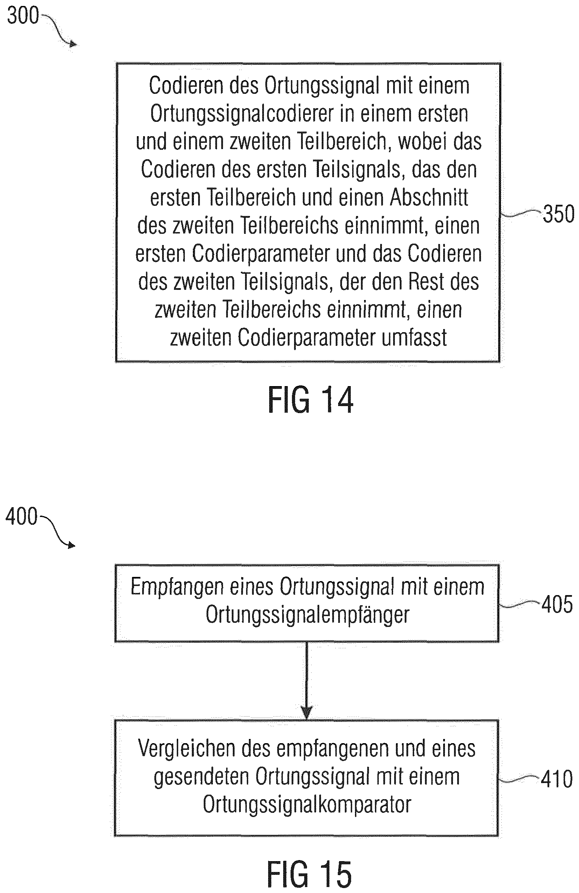

Fig. 14 zeigt ein schematisches Blockdiagramm eines Verfahrens 300 zur Codierung eines Ortungssignals mit einem ersten und einem zu dem ersten Teilsignal orthogonalen zweiten Teilsignals. Das Verfahren 300 beschreibt in Schritt 305 das "Codieren des Ortungssignal mit einem Ortungssignalcodierer in einem ersten und einem zweiten Teilbereich, wobei das Codieren des ersten Teilsignals, das den ersten Teilbereich und einen Abschnitt des zweiten Teilbereichs einnimmt, einen ersten Codierparameter und das Codieren des zweiten Teilsignals, der den Rest des zweiten Teilbereichs einnimmt, einen zweiten Codierparameter umfasst".

Anders ausgedrückt wird das Ortungssignal 7 in zwei Abschnitten, dem Teilsignal 20 und dem Teilsignal 25 codiert, sodass die beiden Teilsignals zueinander orthogonal sind. Die Länge des zweiten Teilsignals 25 sollte kürzer gewählt sein als Länge des zweiten Teilbereichs 15, wobei der zweite Teilbereich 15 der kleinste Teil des gesamten Ortungssignals 7 ist, der bei einer Ortung eines Objekts erhalten wird. D. h. der ein Empfang des zweiten Teilsignals 25 korrespondiert mit einer Reflektion des Ortungssignals an einem Objekt in einer Entfernung $R_{NEAR}$.

Fig. 15 zeigt ein schematisches Blockschaltbild eines Verfahrens 400 zur Ortung eines Objekts. Das Verfahren 400 umfasst in Schritt 405 das Empfangen eines Ortungssignals mit einem Ortungssignalempfänger und in einem Schritt 410 das Vergleichen des empfangenen und eines gesendeten Ortungssignals mit einem Ortungssignalkomparator.

Weitere Ausführungsbeispiele zeigen einen Ortungssignalcodierer 5 gemäß einem der vorherigen Ansprüche, wobei das im zweiten Teilbereich 15 codierte Ortungssignal 7 orthogonal zu jedem möglichen Teil des Ortungssignals 7 ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmier-baren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Quellen

[1] J. P. Costas, "A Study of Class of Detection Waveforms Having Nearly Ideal Range-Doppler Ambiguity Properties", Proc. Ofthe IEEE, 1984, 72, pp 996-1009.

[2] R. Nuthalapati, "Radar Waveform Design and Analysis", Workshop at EuRAD 2012, Amsterdam, The Netherlands, 28 Oct. - 2 Nov. 2012.

**Patentansprüche**

1. Ortungssignalcodierer (5) für eine Ortungsvorrichtung (40), die basierend auf einem Ortungssignal (7) mit einem ersten Teilsignal (20) und einem zu dem ersten Teilsignal (20) orthogonalen zweiten Teilsignal (25) arbeitet,

   wobei der Ortungssignalcodierer (5) ausgebildet ist, das Ortungssignal (7) in einem ersten und einem zweiten Teilbereich (10, 15) zu kodieren, wobei das Codieren des ersten Teilsignals (20), das den ersten Teilbereich (10) und einen Abschnitt des zweiten Teilbereichs (15) einnimmt, einen ersten Codierparameter (30) und das Codieren des zweiten Teilsignals (25), der den Rest des zweiten Teilbereichs (15) einnimmt, einen zweiten Codierparameter (35) umfasst;
   wobei die Orthogonalität des ersten zu dem zweiten Teilsignal durch die Codierung des ersten und des zweiten Teilsignals realisiert ist, wobei die Dauer des zweiten Teilbereichs (15) im Wesentlichen gleich gewählt ist wie die Signalumlaufzeit des Ortungssignals (7) von der Ortungsvorrichtung (40) zu einem nächstliegenden zu detektierenden Ziel und zurück zu der Ortungsvorrichtung.

2. Ortungssignalcodierer (5) gemäß Anspruch 1, wobei das im ersten und im zweiten Teilbereich (10, 15) codierte Ortungssignal (7) die gleiche Bandbreite aufweist.

3. Ortungssignalcodierer (5) gemäß einem der vorherigen Ansprüche, wobei der Ortungssignalcodierer (5) ausgebildet ist, das erste Teilsignal (20) und das zweite Teilsignal (25) mit einem Code unterschiedlicher Länge zu codieren.

4. Ortungssignalcodierer (5) gemäß einem der vorherigen Ansprüche, wobei der Ortungssignalcodierer (5) ausgebildet ist, das Ortungssignal (7) mit einem frequenzmodulierenden Codierverfahren zu codieren.

5. Ortungssignalcodierer (5) gemäß einem der vorherigen Ansprüche, wobei der Ortungssignalcodierer (5) ausgebildet ist, das erste Teilsignal (20) des Ortungssignals (7) mit einem ersten Costas-Code zu codieren und das zweite Teilsignal (25) des Ortungssignals (7) mit einem zweiten Costas-Code zu codieren.

**6.** Ortungssignalcodierer (5) gemäß Anspruch 4, wobei der Ortungssignalcodierer (5) ausgebildet ist, die Dauer eines mit einer gleichen Frequenz modulierten Zeitabschnitts kleiner als 1/5 bzw. kleiner als 1/50 bzw. kleiner als 1/100 der Periodendauer des Ortungssignals (7) zu wählen.

**7.** Ortungssignalcodierer (5) gemäß einem der vorherigen Ansprüche,

wobei der erste Teilbereich (10) ein vorderer Teil des Ortungssignals (5) und der zweite Teilbereich (15) ein hinterer Teil des Ortungssignals (5) ist; oder
wobei der erste Teilbereich (15) der hintere Teil des Ortungssignals (5) und der zweite Teilbereich (15) der vordere Teil des Ortungssignals (5) ist.

**8.** Ortungsvorrichtung (40) mit folgenden Merkmalen:

einem Ortungssignalcodierer (5) gemäß einem der Ansprüche 1-7;
einem Ortungssignalempfänger (45), der ausgebildet ist, ein Ortungssignal (7), das mit dem Ortungssignalcodierer (5) erzeugt wurde, zu empfangen; und
einem Ortungssignalkomparator (50), der ausgebildet ist, das empfangene Ortungssignal (7b) mit dem gesendeten Ortungssignal (7a) zu vergleichen.

**9.** Ortungsvorrichtung (40) gemäß Anspruch 8, wobei der Ortungssignalkomparator (50) das empfangene Ortungssignal (7b) mit dem gesendeten Ortungssignal (7a) kreuzkorreliert.

**10.** Ortungsvorrichtung (40) gemäß einem der Ansprüche 8 oder 9, wobei die Ortungsvorrichtung (40) einen Ortungssignalerzeuger (52) umfasst, der ausgebildet ist, ein Ortungssignal (7) mit einem ersten und einem zu dem ersten Teilsignal (20) orthogonalen zweiten Teilsignal (25) zu erzeugen.

**11.** Ortungsvorrichtung (40) gemäß einem der Ansprüche 8 bis 10 mit folgenden Merkmalen:
einem Positionsbestimmer (55), der ausgebildet ist, die Position eines Objekts, an dem das gesendete Ortungssignal (7a) reflektiert ist, anhand eines Ausgangssignals (60) des Ortungssignalkomparators (50) zu bestimmen.

**12.** Ortungsvorrichtung (40) gemäß einem der Ansprüche 8 bis 11 mit folgenden Merkmalen:
einem Geschwindigkeitsbestimmer (65), der ausgebildet ist, die Geschwindigkeit eines Objekts, an dem das gesendete Ortungssignal (7a) reflektiert ist, anhand des Ausgangssignals (60) des Ortungssignalkomparators (50) zu bestimmen.

**13.** Verfahren (300) zur Codierung eines Ortungssignals (7) mit einem ersten und einem zu dem ersten Teilsignal (20) orthogonalen zweiten Teilsignal (20, 25) mit folgendem Schritt:

Codieren des Ortungssignal (7) mit einem Ortungssignalcodierer (5) in einem ersten und einem zweiten Teilbereich (10, 15), wobei das Codieren des ersten Teilsignals (20), das den ersten Teilbereich (10) und einen Abschnitt des zweiten Teilbereichs (15) einnimmt, einen ersten Codierparameter (30) und das Codieren des zweiten Teilsignals (25), der den Rest des zweiten Teilbereichs (15) einnimmt, einen zweiten Codierparameter (35) umfasst;
wobei die Orthogonalität des ersten zu dem zweiten Teilsignal durch die Codierung des ersten und des zweiten Teilsignals realisiert ist,
wobei die Dauer des zweiten Teilbereichs (15) im Wesentlichen gleich gewählt ist wie die Signalumlaufzeit des Ortungssignals (7) von der Ortungsvorrichtung (40) zu einem nächstliegenden zu detektierenden Ziel und zurück zu der Ortungsvorrichtung.

**14.** Verfahren (400) zur Ortung eines Objekts mit folgenden Schritten:

Empfangen eines Ortungssignals (7) mit einem Ortungssignalempfänger (45), das mit einem Ortungssignalcodierer (5) gemäß einem der Ansprüche 1-7 erzeugt wurde;
Vergleichen des empfangenen und eines gesendeten Ortungssignals (7a, 7b) mit einem Ortungssignalkomparator (50).

**Claims**

**1.** Locating signal encoder (5) for a locating apparatus (40) operating based on a locating signal (7) having a first partial signal (20) and a second partial signal (25) orthogonal to the first partial signal,

wherein the locating signal encoder (5) is configured to encode the locating signal (7) in a first and a second partial area (10, 15), wherein encoding the first partial signal (20) occupying the first partial area (10) and a portion of the second partial (15) includes a first encoding parameter (30) and encoding the second partial signal (25) occupying the rest of the second partial area (15) includes a second encoding parameter (35);
wherein the orthogonality of the first to the second partial signal is realized by encoding the first and the second partial signal,

wherein the duration of the second partial area (15) is essentially selected to be the same as the signal roundtrip time of the locating signal (7) from the locating apparatus (40) to a closest target to be detected and back to the locating apparatus.

2. Locating signal encoder (5) according to claim 1, wherein the locating signal (7) encoded in the first and in the second partial area (10, 15) has the same bandwidth.

3. Locating signal encoder (5) according to one of the preceding claims, wherein the locating signal encoder (5) is configured to encode the first partial signal (20) and the second partial signal (25) with a code of differing length.

4. Locating signal encoder (5) according to one of the preceding claims, wherein the locating signal encoder (5) is configured to encode the locating signal (7) with a frequency-modulated encoding method.

5. Locating signal encoder (5) according to one of the preceding claims, wherein the locating signal encoder (5) is configured to encode the first partial signal (20) of the locating signal (7) with a first Costas code and to encode the second partial signal (25) of the locating signal (7) with a second Costas code.

6. Locating signal encoder (5) according to claim 4, wherein the locating signal encoder (5) is configured to select the duration of a time portion modulated with the same frequency to be less than 1/5 or less than 1/50 or less than 1/100 of the period duration of the locating signal (7).

7. Locating signal encoder (5) according to one of the preceding claims,

   wherein the first partial area (10) is a front part of the locating signal (5) and the second partial area (15) is a rear part of the locating signal (5); or

   wherein the first partial area (15) is the rear part of the locating signal (5) and the second partial area (15) is the front part of the locating signal (5).

8. Locating apparatus (40), comprising:

   a locating signal encoder (5) according to one of claims 1 to 7;
   a locating signal receiver (45) configured to receive a locating signal (7) that has been generated with the locating signal encoder (5); and
   a locating signal comparator (50) configured to compare the received locating signal (7b) with the transmitted locating signal (7a).

9. Locating apparatus (40) according to claim 8, wherein the locating signal comparator (50) cross-correlates the received locating signal (7b) with the transmitted locating signal (7a).

10. Locating apparatus (40) according to one of claims 8 or 9, wherein the locating apparatus (40) includes a locating signal generator (52) configured to generate a locating signal (7) having a first partial signal (20) and a second partial signal (25) orthogonal to the first partial signal.

11. Locating apparatus (40) according to one of claims 8 to 10, comprising:
    a position determiner (55) configured to determine the position of an object where the transmitted locating signal (7a) is reflected based on an output signal (60) of the locating signal comparator (50).

12. Locating apparatus (40) according to one of claims 8 to 11, comprising:
    a velocity determiner (65) configured to determine the velocity of an object where the transmitted locating signal (7a) is reflected based on the output signal (60) of the locating signal comparator (50).

13. Method (300) for encoding a locating signal (7) having a first and a second partial signal (20, 25) orthogonal to the first partial signal (20), comprising:

    encoding the locating signal (7) with a locating signal encoder (5) in a first and a second partial area (10, 15), wherein encoding the first partial signal (20) occupying the first partial area (10) and a portion of the second partial area (15) includes a first encoding parameter (30) and encoding the second partial signal (25) occupying the rest of the second partial area (15) includes a second encoding parameter (35);
    wherein the orthogonality of the first to the second partial signal is realized by encoding the first and the second partial signal,
    wherein the duration of the second partial area (15) is essentially selected to be equal to the signal roundtrip time of the locating signal (7) from the locating apparatus (40) to the closest target to be detected and back to the locating apparatus.

14. Method (400) for localizing an object, comprising:

    receiving a locating signal (7) with a locating signal receiver (45) generated with a locating signal encoder (5) according to one of claims 1 to 7;
    comparing the received and a transmitted locating signal (7a, 7b) with a locating signal compa-

**Revendications**

1. Codeur de signal de localisation (5) pour un dispositif de localisation (40) qui travaille, sur base d'un signal de localisation (7), avec un premier signal partiel (20) et un deuxième signal partiel (25) orthogonal au premier signal partiel (20),

   dans lequel le codeur de signal de localisation (5) est conçu pour coder le signal de localisation (7) dans une première et une deuxième zone partielle (10, 15), dans lequel le codage du premier signal partiel (20), qui occupe la première zone partielle (10) et un segment de la deuxième zone partielle (15), comporte un premier paramètre de codage (30) et le codage du deuxième signal partiel (25), qui occupe le reste de la deuxième zone partielle (15), comporte un deuxième paramètre de codage (35);
   dans lequel l'orthogonalité du premier par rapport au deuxième signal partiel est réalisée par le codage du premier et du deuxième signal partiel,
   dans lequel la durée de la deuxième zone partielle (15) est choisie sensiblement identique à la durée de circulation du signal de localisation (7) du dispositif de localisation (40) à une cible à détecter située à proximité et de retour vers le dispositif de localisation.

2. Codeur de signal de localisation (5) selon la revendication 1, dans lequel le signal de localisation (7) codé dans la première et dans la deuxième zone partielle (10, 15) présente la même largeur de bande.

3. Codeur de signal de localisation (5) selon l'une des revendications précédentes, dans lequel le codeur de signal de localisation (5) est conçu pour coder le premier signal partiel (20) et le deuxième signal partiel (25) à l'aide d'un code de longueur différente.

4. Codeur de signal de localisation (5) selon l'une des revendications précédentes, dans lequel le codeur de signal de localisation (5) est conçu pour coder le signal de localisation (7) par un procédé de codage à modulation de fréquence.

5. Codeur de signal de localisation (5) selon l'une des revendications précédentes, dans lequel le codeur de signal de localisation (5) est conçu pour coder le premier signal partiel (20) du signal de localisation (7) à l'aide d'un premier code de Costas et pour coder le deuxième signal partiel (25) du signal de localisation (7) à l'aide d'un deuxième code de Costas.

6. Codeur de signal de localisation (5) selon la revendication 4, dans lequel le codeur de signal de localisation (5) est conçu pour choisir la durée d'un segment de temps modulé avec une même fréquence inférieure à 1/5 ou inférieure à 1/50 ou inférieure à 1/100 de la durée du signal de localisation (7).

7. Codeur de signal de localisation (5) selon l'une des revendications précédentes,

   dans lequel la première zone partielle (10) est une partie avant du signal de localisation (5) et la deuxième zone partielle (15) est une partie arrière du signal de localisation (5); ou
   dans lequel la première zone partielle (15) est la partie arrière du signal de localisation (5) et la deuxième zone partielle (15) est la partie avant du signal de localisation (5).

8. Dispositif de localisation (40), aux caractéristiques suivantes:

   un codeur de signal de localisation (5) selon l'une des revendications 1 à 7;
   un récepteur de signal de localisation (45) qui est conçu pour recevoir un signal de localisation (7) qui a été généré par le codeur de signal de localisation (5); et
   un comparateur de signal de localisation (50) qui est conçu pour comparer le signal de localisation reçu (7b) avec le signal de localisation transmis (7a).

9. Dispositif de localisation (40) selon la revendication 8, dans lequel le comparateur de signal de localisation (50) effectue une corrélation croisée du signal de localisation reçu (7b) avec le signal de localisation transmis (7a).

10. Dispositif de localisation (40) selon l'une des revendications 8 ou 9, dans lequel le dispositif de localisation (40) comporte un générateur de signal de localisation (52) qui est conçu pour générer un signal de localisation (7) avec un premier et un deuxième signal partiel (25) orthogonal au premier signal partiel (20).

11. Dispositif de localisation (40) selon l'une des revendications 8 à 10, aux caractéristiques suivantes:
   un déterminateur de position (55) qui est conçu pour déterminer la position d'un objet auquel est réfléchi le signal de localisation transmis (7a), sur base d'un signal de sortie (60) du comparateur de signal de localisation (50).

12. Dispositif de localisation (40) selon l'une des revendications 8 à 11, aux caractéristiques suivantes:
   un déterminateur de vitesse (65) qui est conçu pour déterminer la vitesse d'un objet auquel est réfléchi le signal de localisation transmis (7a), sur base du signal de sortie (60) du comparateur de signal de localisation (50).

13. Procédé (300) pour coder un signal de localisation (7) avec un premier et un deuxième signal partiel (20, 25) orthogonal au premier signal partiel (20), à l'étape suivante consistant à:

> coder le signal de localisation (7) par un codeur de signal de localisation (5) dans une première et une deuxième zone partielle (10, 15), où le codage du premier signal partiel (20), qui occupe la première zone partielle (10) et un segment de la deuxième zone partielle (15), comporte un premier paramètre de codage (30) et le codage du deuxième signal partiel (25), qui occupe le reste de la deuxième zone partielle (15), comporte un deuxième paramètre de codage (35);
> dans lequel l'orthogonalité du premier par rapport au deuxième signal partiel est réalisée par le codage du premier et du deuxième signal partiel,
> dans lequel la durée de la deuxième zone partielle (15) est choisie sensiblement identique à la durée de circulation du signal de localisation (7) du dispositif de localisation (40) à une cible à détecter située à proximité et de retour vers le dispositif de localisation.

14. Procédé (400) pour localiser un objet, aux étapes suivantes consistant à:

> recevoir, par un récepteur de signal de localisation (45), un signal de localisation (7) qui a été généré par un codeur de signal de localisation (5) selon l'une quelconque des revendications 1 à 7;
> comparer le signal de localisation reçu et un signal de localisation transmis (7a, 7b) à l'aide d'un comparateur de signal de localisation (50).

FIG 1

EP 3 006 954 B1

FIG 2

FIG 3

FIG 4

FIG 5

a)

7a → TX Puls

| 10 | 15 |
|---|---|
| vorderer Teil | hinterer Teil |

75

Reichweitenoptimierungsfilter

→ TX

b)

7b → R$_{NEAR}$

| 10 | 15 |
|---|---|
| vorderer Teil | hinterer Teil |

80

85a

gleiche
Auflösung

c)

7b → mittlere
Reichweite

| 10 | 15 |
|---|---|
| vorderer Teil | hinterer Teil |

80

85b

d)

7b → R$_{FAR}$

| 10 | 15 |
|---|---|
| vorderer Teil | hinterer Teil |

80

85c

zunehmende Reichweitenkomprimierungsverstärkung

FIG 6

FIG 7

EP 3 006 954 B1

FIG 8

FIG 9

FIG 10

FIG 11

FIG 12

FIG 13

EP 3 006 954 B1

300

Codieren des Ortungssignal mit einem
Ortungssignalcodierer in einem ersten
und einem zweiten Teilbereich, wobei das
Codieren des ersten Teilsignals, das den
ersten Teilbereich und einen Abschnitt
des zweiten Teilbereichs einnimmt, einen
ersten Codierparameter und das Codieren
des zweiten Teilsignals, der den Rest des
zweiten Teilbereichs einnimmt, einen
zweiten Codierparameter umfasst

350

FIG 14

400

Empfangen eines Ortungssignal mit einem
Ortungssignalempfänger

405

Vergleichen des empfangenen und eines
gesendeten Ortungssignal mit einem
Ortungssignalkomparator

410

FIG 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1457789 A2
- EP 1804077 A1

- US 20120055250 A1

**In der Beschreibung aufgeführte Nicht-Patentliteratur**

- **J. P. COSTAS.** A Study of Class of Detection Waveforms Having Nearly Ideal Range-Doppler Ambiguity Properties. *Proc. Ofthe IEEE,* 1984, vol. 72, 996-1009

- **R. NUTHALAPATI.** Radar Waveform Design and Analysis. *Workshop at EuRAD,* 2012